Europäisches Patentamt

European Patent Office

Office européen des brevets

(19)

(11) **EP 1 062 749 B1**

(12) **EUROPEAN PATENT SPECIFICATION**

(45) Date of publication and mention
of the grant of the patent:
**23.01.2002 Bulletin 2002/04**

(21) Application number: **99914923.0**

(22) Date of filing: **17.03.1999**

(51) Int Cl.⁷: **H04B 7/26**, H04Q 7/36

(86) International application number:
**PCT/US99/05776**

(87) International publication number:
**WO 99/48228 (23.09.1999 Gazette 1999/38)**

(54) **MODULAR BASE STATION WITH VARIABLE COMMUNICATION CAPACITY**

MODULARE FESTSTATION MIT VARIABLER DATENÜBERTRAGUNGSKAPAZITÄT

STATION DE BASE MODULAIRE A CAPACITE DE COMMUNICATION VARIABLE

(84) Designated Contracting States:
**AT BE CH CY DE DK ES FI FR GB GR IE IT LI LU
MC NL PT SE**

(30) Priority: **17.03.1998 US 78314 P**

(43) Date of publication of application:
**27.12.2000 Bulletin 2000/52**

(73) Proprietor: **INTERDIGITAL TECHNOLOGY
CORPORATION
Wilmington, DE 19801 (US)**

(72) Inventors:
• **POLAN, Jeffrey
Deer Park, NY 11729 (US)**
• **DICK, Stephen, G.
Nesconset, NY 11767 (US)**
• **KAZAKEVICH, Leonid
Plainview, NY 11803 (US)**
• **OZLUTURK, Fatih, M.
Port Washington, NY 11050 (US)**
• **REGIS, Robert, T.
Huntington, NY 11743 (US)**
• **TURNER, Richard
Oakdale, NY 11769 (US)**

(74) Representative:
**Frohwitter, Bernhard, Dipl.-Ing. et al
Patent- und Rechtsanwälte, Possartstrasse 20
81679 München (DE)**

(56) References cited:
**US-A- 5 584 049**

• **BEHAGUE F ET AL: "MODULARITY AND
FLEXIBILITY: THE KEYS TO BASE STATION
SYSTEM CONFIGURATION FOR THE GSM
NETWORK" MRC MOBILE RADIO
CONFERENCE, 13 November 1991 (1991-11-13),
pages 161-168, XP000573438**

## Description

## BACKGROUND OF THE INVENTION

### Field Of The Invention

The present invention relates to communication systems. More specifically, the invention relates to a communication system using a code division multiple access air interface between a plurality of individual subscribers distributed within a cellular community and a plurality of small capacity base stations, some colocated per cell to increase operational economy in proportion to the number of subscribers.

### Description Of The Prior Art

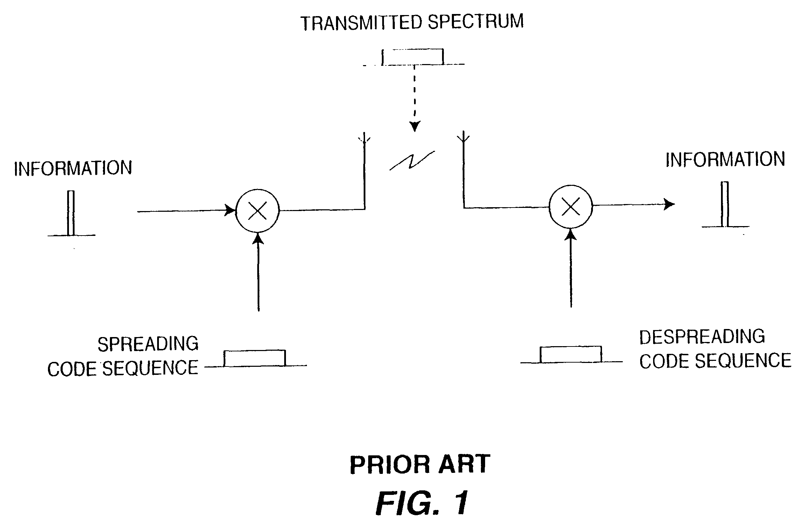

Advanced cellular communication makes use of a state of the art technique known as code division multiplexing, or more commonly, as code divisional multiple access or CDMA. An example prior art communication system is shown in **Figure 1.**

CDMA is a communication technique in which data is transmitted with a broadened band (spread spectrum) by modulating the data to be transmitted with a pseudo-noise signal. The data signal to be transmitted may have a bandwidth of only a few thousand Hertz distributed over a frequency band that may be several million Hertz wide. The communication channel is being used simultaneously by $m$ independent subchannels. For each subchannel, all other subchannels appear as noise.

As shown, a single subchannel of a given bandwidth is mixed with a unique spreading code which repeats a predetermined pattern generated by a wide bandwidth, pseudo-noise (pn) sequence generator. These unique user spreading codes are typically orthogonal to one another such that the cross-correlation between the spreading codes is approximately zero. The data signal is modulated with the pn sequence producing a digital spread spectrum signal. A carrier signal is then modulated with the digital spread spectrum signal establishing a forward-link and transmitted. A receiver demodulates the transmission extracting the digital spread spectrum signal. The transmitted data is reproduced after correlation with the matching pn sequence. When the spreading codes are orthogonal to one another, the received signal can be correlated with a particular user signal related to the particular spreading code such that only the desired user signal related to the particular spreading code is enhanced while the other signals for all other users are not enhanced. The same process is repeated to establish a reverse-link.

If a coherent modulation technique such as phase shift keying or PSK is used for a plurality of subscribers, whether stationary or mobile, a global pilot is continuously transmitted by the base station for synchronizing with the subscribers. The subscriber units are synchronizing with the base station at all times and use the pilot signal information to estimate channel phase and magnitude parameters. For the reverse-link, a common pilot signal is not feasible. Typically, only non-coherent detection techniques are suitable to establish reverse-link communications. For initial acquisition by the base station to establish a reverse-link, a subscriber transmits a random access packet over a predetermined random access channel (RACH).

Most prior art CDMA communications systems employed to date, whether communicating with fixed or mobile subscribers that include personal communication services (PCS), have been designed for immediate large scale traffic considerations. A communication system specification proposed by a service provider establishes a required number of base stations which determine the region of communication coverage. The specification geographically locates each cell and establishes a traffic capacity that determines the number of anticipated subscribers per cell including fixed and mobile. The maximum capacity of communication traffic in each cell is typically fixed by this design.

Prior art CDMA communication systems have been designed and sized to immediately handle many simultaneous communications and are therefore costly start-up installations for the service provider. These systems have not addressed the need for a flexible base station architecture that permits a cost effective, small scale initial installation that can accommodate future subscriber growth.

The document 'MODULARITY AND FLEXIBILITY: THE KEYS TO BASE STATION SYSTEM CONFIGURATION FOR THE GSM NETWORK', pages 161-168, published on 13. November 1991 by F. Behague, T. Billon and J. Cellmer [XP000573438] discloses a scalable base station comprising a number of colocated base station units for supporting incremental communication capacity.

US-A-5 584 049 discloses a bidirectional communication system using a CDMA air interface, said system comprising a base station transmitting a global pilot signal.

Accordingly, the object of the present invention is to decrease the initial installation cost of a CDMA communication system while allowing future expansion when the need arises.

## SUMMARY OF THE INVENTION

The present invention provides a base station architecture that is modular in configuration, lowering the initial cost of implementing a new CDMA telecommunication system for a defined geographical region while allowing for future capacity. The scalable architecture is assembled from a digital base station unit that is configured to support a plurality of simultaneous wireless calls connecting to a conventional public switched telephone network. For initial startup, two base station units are deployed for redundancy in case of a single failure. Additional base station units may be added when the need arises for extra traffic capacity. If sectorization is required, the base station units may be directionally oriented. Coupled to and remote from each base station unit are two amplified antenna modules that contain an omnidirectional or an external directional antenna, a high power RF amplifier for transmitted frequencies and a low noise amplifier for received frequencies. A separate power supply module capable of supporting two base station units provides continued service in the event of a mains power outage.

The present invention supports both small and large size sectors or omni-cells with an architecture that allows for easy growth to support expanding traffic capacity without incurring a large initial fixed cost.

Accordingly, it is an object of the present invention to allow for easy expansion when subscriber communication traffic increases.

Other advantages may become apparent to those skilled in the art after reading the detailed description of the preferred embodiment.

## BRIEF DESCRIPTION OF THE DRAWINGS

Figure 1 is a simplified block diagram of a typical, prior art, CDMA communication system.

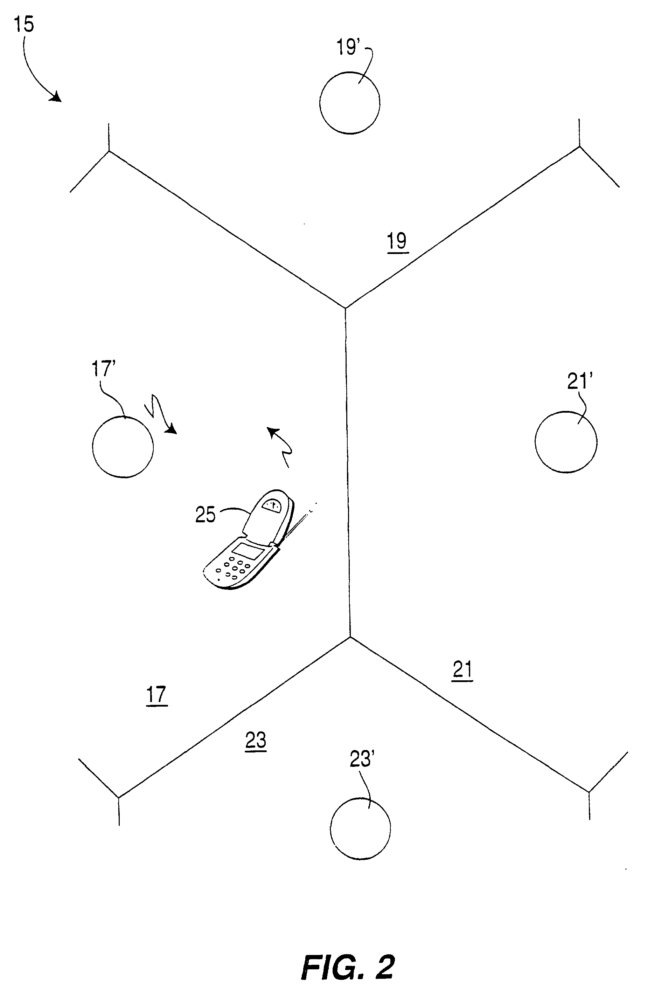

Figure 2 is a communication network embodiment of the present invention.

Figure 3 is a physical installation of a scalable modular base station.

Figure 4 is a block diagram of a power supply for the scalable modular base station.

Figure 5 is a block diagram of a base station unit.

Figure 6 is a block diagram of two base station units.

Figure 7A is a block diagram of two amplified antenna modules and radio frequency control modules for the first base station as shown in Figure 6.

Figure 7B is a block diagram of a baseband transceiver module and six air interface modules for the first base station unit as shown in Figure 6.

Figure 7C is a block diagram of two amplified antenna modules and radio frequency control modules for the second base station unit as shown in Figure 6.

Figure 7D is a block diagram of a baseband transceiver module and six air interface modules for the second base station unit as shown in Figure 6.

Figure 8 is block diagram of a scalable base station using two base station units.

## DESCRIPTION OF THE PREFERRED EMBODIMENT

The present invention is described with reference to the drawings figures where like numerals represent like elements throughout.

A system diagram illustrating a CDMA communication system 15 employing scalable modular base stations is shown in Figure 1. Four cells 17, 19, 21, 23 of a multicellular telecommunication system are shown with respect to their base station transceivers 17', 19', 21', 23'. One subscriber unit 25 is shown within one cell. A plurality of individual forward and reverse signals are transmitted in respective regions of the common CDMA frequency bandwidth between the base station 17' and subscriber unit 25.

The base station units or BSUs employed in the scalable modular base station enable a scalable configuration proportional to the number of subscribers 25. As an example, 150 subscribers whose average utilization during busy period is less than 10 percent, would require a base station unit with 16 modems supporting up to 15 simultaneous calls. For redundancy in case of a single failure, the scalable modular base station requires two colocated BSUs (having twice the minimum capacity) to serve the same communicating population to provide limited service in the event that one BSU failed.

The colocated modular approach supports additional growth, expanding beyond the two BSUs as the need arises. Each BSU is omnidirectional or may be configured with a directional antenna for sectoring. Likewise, as growth in a particular area of the cell arises, BSUs favoring a specified direction would be deployed to service the higher density sector. Each BSU connects to the public switched telephone network or PSTN via any one of several standard or proprietary terrestrial interfaces.

To support fault tolerance, it is necessary that each subscriber unit 25 be capable of communicating with a minimum of two BSUs. If 1 to $n$ BSUs share coverage of a given cell area or sector, each subscriber unit 25 can communicate with any one of the $n$ BSUs. In a presently preferred embodiment, $n$ =6. Each subscriber unit 25 with the cell selects the BSU having the smallest path loss.

The scalable modular base station for a CDMA air interface requires a set of global channels to support operation. The global pilot supports initial acquisition by the subscriber and provides channel estimation for coherent processing. One or more global broadcast channels provide signaling information. Each BSU requires its own set of global channels. However, global channels use air capacity and is therefore costly to assign a set of full strength global channels for each BSU.

The scalable modular base station supports subscriber operation on battery standby during power outages. To do so requires a sleep mode where the subscriber unit 25 wakes up briefly, for example, once per second, to check for paging messages indicating an incoming call. However, when a subscriber's waking period is short, a base station's global pilot must be strong. The pilot strength must be greater than the level needed to simply provide a reference signal for coherent demodulation and channel estimation.

Each subscriber unit **25** is assigned to a set of colocated BSUs and alternately acquires each one in sequence, once per wake up period. The subscriber unit **25** acquires a first BSU on even seconds and a second BSU on odd seconds. If more than two BSUs are deployed, the subscriber acquires each BSU in sequence returning to the first for the next interval. In direct correspondence, each BSU transmits its pilot at alternating high and low power levels in dependence upon how many BSUs are deployed in the particular cell. Only one BSU transmits a high power global pilot at a given time. The BSUs are preprogrammed to specify which BSU is selected to send its pilot at high power and which is selected to send its pilot at low power.

All colocated BSUs of the same group are preprogrammed to store two indices; I*group*, which designates the identity of the group and I*unit*, which designates the identity of the BSU within the group. Each subscriber unit **25** is assigned to a group, designated by I*group*. For fixed wireless access, this can be designated and entered during registration. For mobile subscribers, this can be derived by the subscriber unit **25** testing the relative strengths of BSU pilots and selecting the strongest as is used for roaming and handoff.

Once a subscriber unit **25** is associated with an I*group,* when synchronizing it accesses each member BSU of the group; I*group, I**unit*. Each time a subscriber unit **25** wakes up, it re-synchronizes with the pilot signal of the BSU (I*unit*) transmitting the pilot at full power. The subscriber unit **25** derives the identity of the BSU based on time of day. Other subscriber units **25** associated with I*group* use the same method to specify which BSU is transmitting the strong pilot and broadcast channels. The effect is that all subscriber units **25** wake up and listen to the pilot and broadcast channels of the respective BSU transmitting at full power.

Each subscriber unit **25** receives the time of day from the PSTN. Network Operations and Maintenance functions provide messages which contain the time of day accurate to within 2 milliseconds. The messages are sent over the terrestrial link from the O&M function to each base station location and on to each BSU. Each BSU sends the time of day once over a slow broadcast channel. The subscriber unit **25** uses the message to synchronize its internal clock.

The time of day (tod) is converted to the identity of one BSU by using modular arithmetic

$$I\textit{unit} = \text{tod mod}(n) \qquad \text{Equation 1}$$

where *n* is the stored value of the number of BSUs within I*group*. Both the BSU and all subscribers of I*group* know which BSU will be broadcasting at a specific time. When awakened, the subscriber unit **25** synchronizes time, reads the messages in its assigned time slot and measures the strength of the received pilot signal from the transmitting BSU. The subscriber unit **25** also measures the activity of the transmitting BSU.

The BSUs indicate the amount of capacity over the slow or fast broadcast channels. The slow broadcast channel indicates the amount of activity. The fast broadcast channel indicates activity through the use of traffic lights. Each traffic channel has an indicator called a traffic light resident on the fast broadcast channel which tells the subscriber unit **25** availability. Using the traffic lights as capacity indication, the subscriber unit **25** can derive which of the BSUs is least busy. All BSUs send paging messages. Upon identifying a page, the subscriber unit **25** will select the optimal BSU to connect with. The choice is determined on information such as level of usage and signal strength. The subscriber unit **25** will select the BSU which is associated with the strongest received pilot level unless that BSU is near maximum capacity determined by the traffic lights and/or the level of activity.

Since a BSU pilot is always programmed to be strong when a subscriber unit **25** wakes-up, the wake up time can be minimized. The strong pilot is required to simplify reacquisition by a subscriber unit **25** after wake-up. Thereafter, the subscriber unit **25** returns to low duty cycle and low battery consumption. The lower level pilot, with a signal power level approximately 1/2 of a normal traffic channel is transmitted at all times. Since each BSU is transmitting a global pilot at a lower power level when not supporting the wake-up process, each BSU supports coherent demodulation of established traffic channels at all times with a negligible affect on total air capacity.

For each wake-up cycle, the subscriber units **25** derive the BSU of choice from the I*group*, based on the time of day, and load the pn spreading codes corresponding to the global pilot and broadcast channels of the BSU chosen. The subscriber unit **25** then measures the relative strength of the received pilot signal, once per wake-up cycle and stores the relative level and performs an average of the most recent set of measurements for each of the candidate BSUs.

The subscriber unit **25** reads the amount of traffic currently supported by the given BSU if that information is transmitted on the slow broadcast channel or, observes and stores the number of red traffic lights on each BSU maintaining a short term average.

The subscriber unit **25** performs a selection process to identify a favored BSU. When a subscriber unit **25** requests an access channel, the preferred BSU is selected loading the appropriate codes and initiating a normal ramp-up process.

The BSUs maintain a time of day clock, reading the time at either once per millisecond or once per subepoch. The time of day is used to identify its global channel transmit period. Thereafter, its respective global channels are allocated and the transmit power is set to the desired level. Traffic messages and signals normally sent by the BSU over its broadcast channels proceed. When synchronization between the subscriber unit **25** and a BSU is complete, the subscriber unit **25** transmits symbol length short code while gradually increasing the transmit power level. The subscriber unit **25** monitors the BSU for an acknowledgment signal, which acts as a traffic light to determine if the BSU receives and acknowledges the short code.

The subscriber unit **25** process for BSU selection includes keeping a data base in memory with the following information:

- RelPower(I*unit*); *where* I*unit* = 1 to *n*
  where RelPower is the relative power of BSU (I*unit*) and there are *n units* total.
- Activity(I*unit*); where I*unit* = 1 to *n*

For each wake up cycle:

- RelPower(I*unit*) is maintained as a low pass filtered estimate of the received measured pilot power:

  • RelPower(I*unit*) = RelPower(I*unit*) + $\alpha$(measured

  pilot power- RelPower)       Equation 2

- Activity(I*unit*) = level of traffic as sent on broadcast channel, or
- Activity(I*unit*) = number of red traffic lights counted on current wake up cycle for the BSU

When a subscriber unit **25** attempts an access request, the BSU assignment is determined as a function of relative received pilot power level and relative activity. For example, the subscriber unit **25** can select the BSU with the strongest received pilot provided its activity is below a threshold. As one skilled in this art would recognize, other performance criteria could be used.

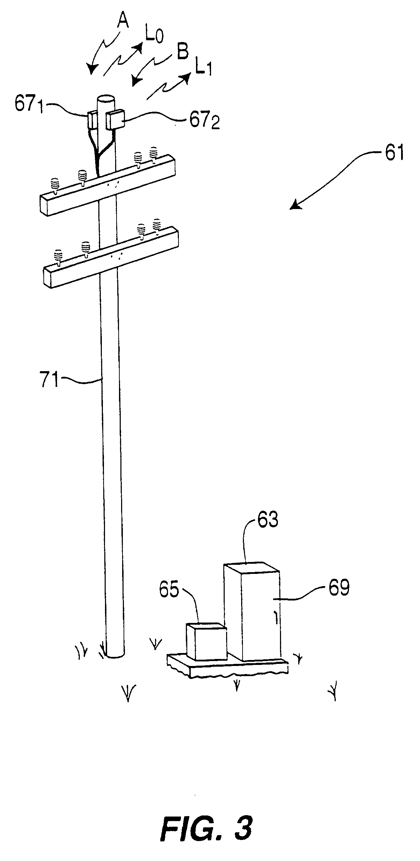

The architecture and physical implementation for an example scalable modular base station **61** is shown in **Figures 3, 4** and **5.** The physical configuration for a base station **61** includes four separate enclosures: 1) a digital base station cabinet (DBC) **63;** 2) a base station power supply module (BSPM) **65;** and 3&4) two amplified antenna modules (AAM) **67$_1$, 67$_2$.**

The base station cabinet **63** is an environmental enclosure which supports indoor or outdoor installation. The DBC **63** houses BSUs **69.** The AAMs **67$_1$, 67$_2$** are mounted remote from the BSU **69,** at a high elevation **71.** Each BSU **69** requires two AAMs **67.**

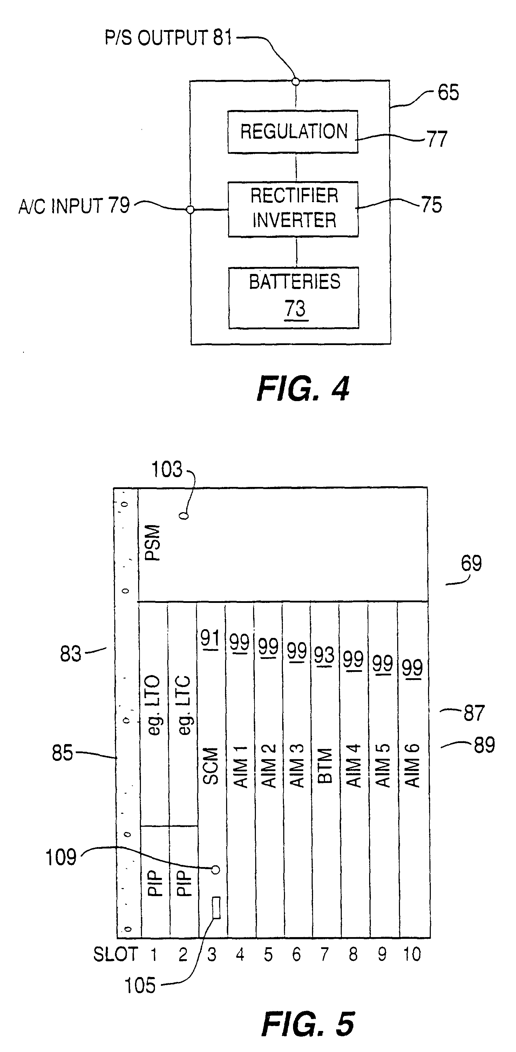

The BSPM **65** is shown in **Figure 4** and includes storage batteries **73,** an ac/dc rectifier/inverter **75** and active voltage regulation **77.** The BSPM **65** receives external power **79** from a 120/220 Vac mains power supply (not shown) and provides an isolated filtered output **81** to a DBC **63.** Operation is similar to an uninterruptable power supply commonly known in the electronic arts. The batteries **73** provide up to four hours of continuous operation for one DBC **63** (two BSUs **69**) configured for maximum capacity upon a mains power supply fault. Power is coupled via an umbilical to the respective BSU(s) **69.** Since a DBC **63** may be located outdoors, the BPSM **65** is remote and environmentally sealed as well.

As shown in **Figure 5,** the BSU **69** is a card rack **83** assembly having a common communication backplane **85** using a high speed parallel data bus **87** and a power distribution bus **89.** The removable card complement for a base station **61** requires: 1) one system control module (SCM) **91;** 2) one baseband transceiver module (BTM) **93;** 3) one power supply module (PSM) **95;** 4) two radio frequency control modules (RFC) **97;** and 5) up to six air interface modules (AIM) **99** each having 16 transmit/receive modems **101.** The PSM **95** couples the external BSPM **65** with a BSU **69** via male/female connectors **103** and provides local power supply regulation and filtering.

The SCM **91** contains a systems level microprocessor with collateral memory for controlling transmit/receive modem selection and coordinating component failure with another colocated BSU **69.** Each SCM **91** includes a communication bus port **105** to allow communication over a data transport **107** such as Ethernet® E1 line between colocated BSUs **69.** The communication bus **107** also allows external interrogation of each SCM **91** for up-loading or down-loading operational software or operation parameters. SCM **91** identification is accomplished via DIP switches or the like. External connections to the modular base station are made via F-ports **108** on this module and can support copper HDLC lines or fiber optic lines for receiving a POTS E1 line **111** which may carry up to 60 EDPCM calls.

The BTM **93** coordinates transmission by combining the analog baseband signals from active transmit AIMs **99** and distributes received communication signals to active receive AIMs **99.** If the required capacity of an installation requires two BSUs **69,** each BTM **93** per BSU **69** is coupled with each other.

The RFC **97** accepts the signal from a BTM **93** and upconverts **113** for transmission L$_0$, L$_1$. Likewise, the RFC **97** downconverts **115** received signals A, B for the BTM **93.** Digital to analog conversion along with transmit **114** and receive **119** selectable digital delays take place in the RFC **97.**

The AAM **67** encloses an omnidirectional printed circuit antenna **121** for transmission L$_0$, L$_1$ and reception A, B of communication signals. A directional antenna **123** may be employed if cell sectorization is a design requirement. The antenna **123** may be configured to support three and six sector operation. High **125** and low **127** power duplexers separate the transmitting L$_0$, L$_1$ and receiving A, B frequencies with separate amplifiers **129,131** located in between for each respective frequency direction. Remote location of the transmitting **129** and receiving **131** amplifiers allow the use of low cost coaxial cable **133** between a RFC **97** and an AAM **67.** A dc potential is impressed by the BTM **93** on the coaxial cable to power both amplifiers **129, 131.**

Each AIM **99** includes up to **16** individual modems **135** for either transmission $L_0$, $L_1$ or reception A, B depending on assignment. A BSU **69** can be configured with a minimum of one up to a complement of six AIMs **99.** Each AIM **99** contains 16 modems (15 simultaneous calls plus one broadcast modem). Depending upon traffic need, a maximum of six AIMs **99** can support up to 98 PCM or 180 LD-CELP calls.

The modular architecture **61** can support both small and large size sectors in a cell or an omni cell. Each BSU **69** is initially configured to support the number of calls and the specific type of service required depending upon the number of modems **135** (AIMs **99)** installed. A minimum of two colocated BSUs **69** are required for redundant operation at a designated cell location. Since each BSU **69** has no internal redundancy if a single failure occurs, redundancy is achieved by allowing any fixed or mobile subscriber unit **25** to communicate with a colocated BSU **69** at the cell base station site. Redundancy is achieved by allowing any subscriber **25** to associate with any BSU **69** in a sector. If a BSU **69** should fail, capacity is lost, but a subscriber **25** can access another colocated BSU **69.** A BSU **69** in a sector can be configured with excess capacity thereby providing a cushion in the unlikely event of a failure in that sector.

Each BSU **69** communicates independently with an assigned subscriber. As previously described, to accomplish this function each BSU **69** must have unique global channels for the global pilot **137,** the fast broadcast channel **139** and the slow broadcast channel **141.**

The unique global pilot **137** allows each subscriber **25** to synchronize with an individual BSU **69.** The fast broadcast channel **139** provides a traffic light function to the subscriber **25** informing him on BSU **69** availability and power ramp-up status from the respective BSU **69.** The slow broadcast channel **141** transports activity and paging information from the BSU **69** to the subscriber **25** for personal communication services (PCS).

As discussed above, if each BSU **69** global pilot signal is transmitted as in the prior art, sector or cell capacity availability would be severely affected due to the effect on air capacity. Unlike the prior art, each BSU **69** continuously transmits a weak global pilot signal **137** approximately one half of the signal strength of a standard 32kbps POTS traffic channel.

Each colocated BSU **69** recognizes and handshakes with other colocated BSUs **69** via the external system communication E1 line **107,** coupling each BSU **69** BTM **93**/SCM **91** with each other to coordinate the transmitting of the global pilot signals **137** from one base station location. The E1 line **107** interrogates each of the colocated BSUs **69** to coordinate the transmission of each of their unique global pilot signals **137.** Each BSU **69** increases its global pilot signal **137** level to a normal traffic channel level for a finite period of time. Each other BSU **69** continues transmitting their respective global pilot signals **137** but at the weaker power level. This method insures that only one BSU **69** is transmitting its respective global pilot signal **137** at a high power level.

The fast **139** and slow **141** broadcast channels are transmitted from each BSU **69** at a nominal power level. If many BSUs **69** are colocated, the total air capacity overhead required to transmit the fast **139** and slow **141** broadcast channels, global pilot signals **137** and one strong global pilot signal **137** is increased when compared to one base station. However, the maximum capacity of 98 PCM calls per sector or cell is not affected since the overhead occurred only in the forward-link. The reverse-link is more problematic because of the assigned pilots 143 from each subscriber limiting air capacity.

The power modulation of each pilot signal **137** from a BSU **69** benefits the acquisition of subscribers **25.** Since each BSU **69** broadcasts its pilot signal **137** at the normal power level for a finite period of time, a subscriber **25** will most likely acquire the strongest pilot signal **137.** If the BSU **69** at maximum power has all of its modems **135** active (either transmitting or receiving), the subscriber unit **25** will pass over and attempt to acquire the next consecutive full power pilot signal **137.**

Each BSU **69** requires unique codes to transmit the unique global pilot signals **137.** A common seed is provided to all BSUs **69** for the each pilot signal **137,** but unique identities are manufactured by offsetting the code by $z$-thousand chips to effectively produce a unique code for each BSU **69.** From a single, common global pilot seed, a plurality of unique codes will be produced for each BSU **69.**

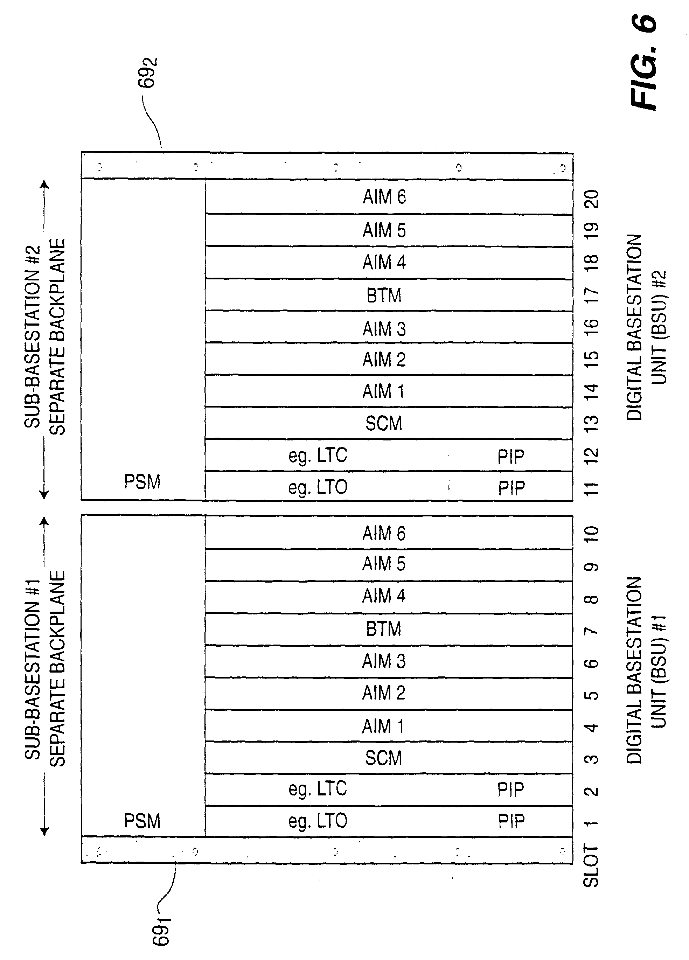

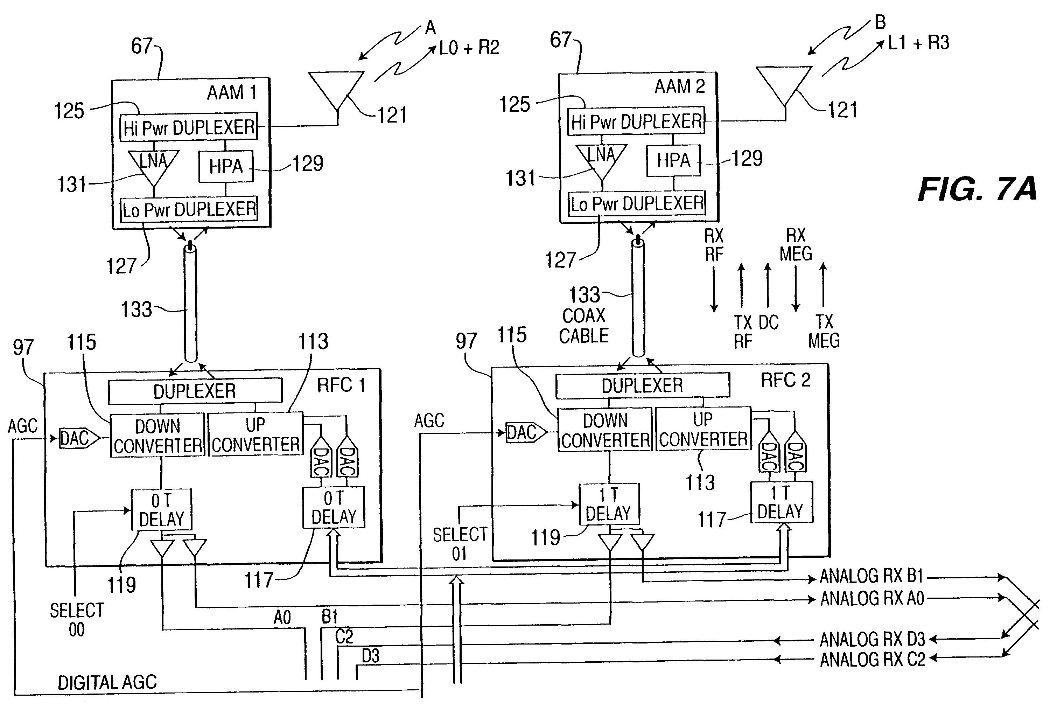

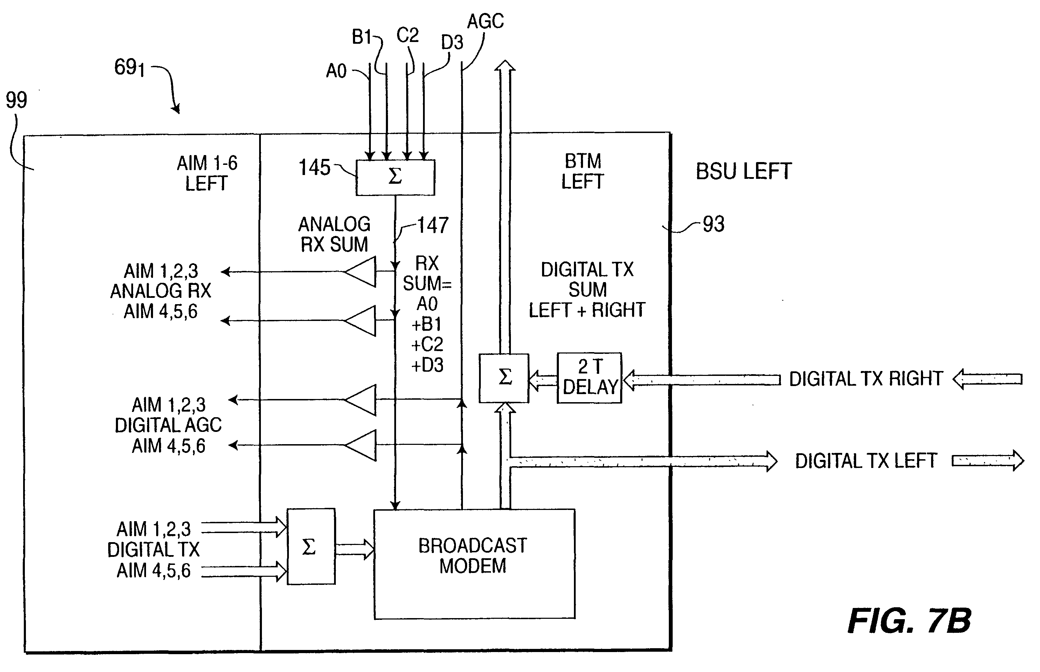

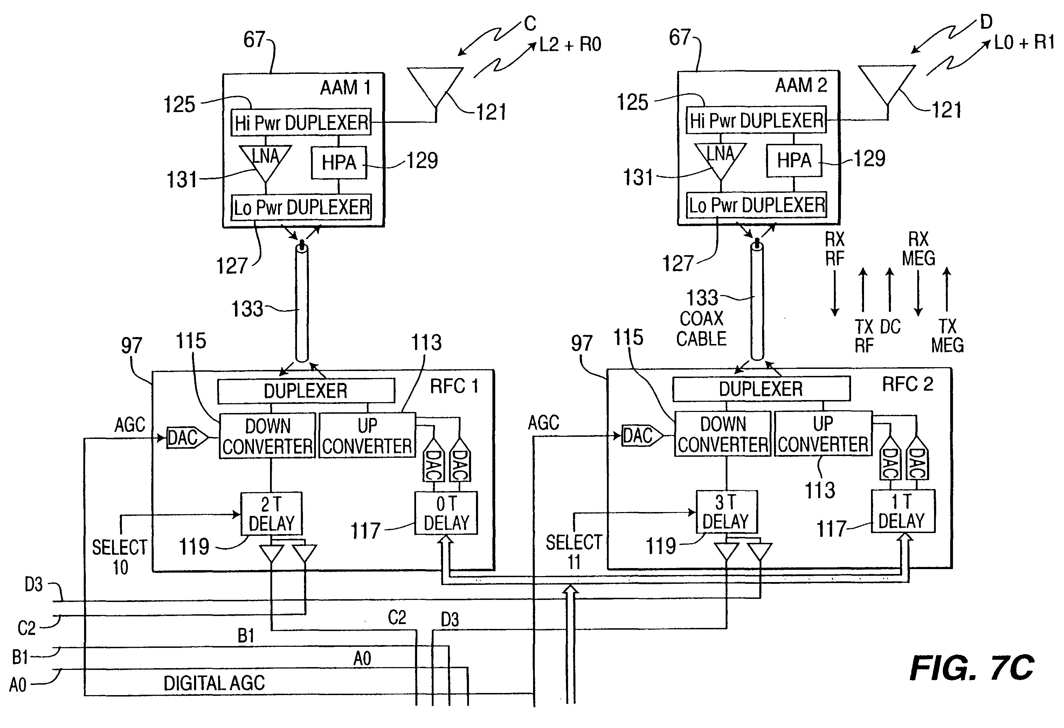

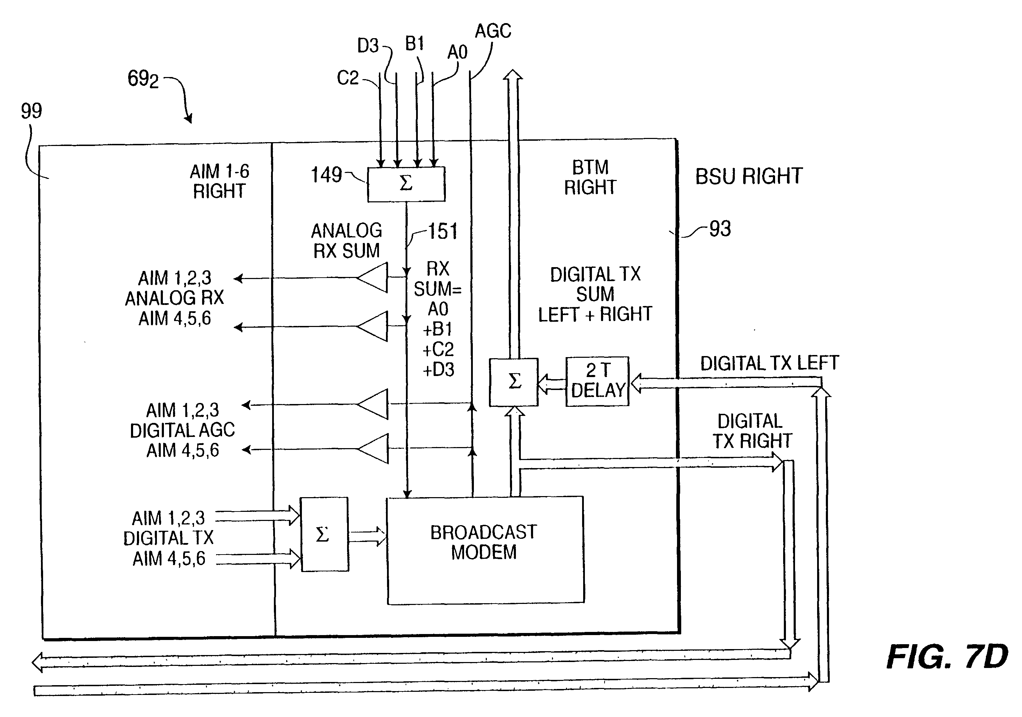

Referring to **Figures 6** and **7A** through **7D,** a scalable modular base station **61** installation includes at least one, two (as-shown), or a plurality of BSUs if required.

The adjustable receive delay units **119** located in each AAM **67** shift the time-of-arrival for the received signals A, B, C, D. A single BSU **69** installation processes two adjustable time of arrivals **119** where each is summed **145** yielding a signal **147** that will have 2 copies of the received signal with different time delays.

A modular base station **61** that is sectorized or is configured for a large number of subscribers **25** will have a plurality of BSUs **69.** All AAMs **67** associated with this installation will share their received signals with each BSU **69.** The individual antenna **121** output are coupled to summers **145, 149** located on each respective BTM **93** of a BSU **69.**

All adjustable **119** time of arrivals are summed and input into each BSU **69** yielding a signal that will have $y$ copies of the received signal with different time delays where $y$ is an integer. Each AAM **67** receive delay unit **119** has a different predetermined delay. Preferably, each delay unit **119** imparts a delay of at least two chips which enables further processing to achieve a net increase in signal strength.

Each CDMA communication is associated with a unique code. The AIM **99** modems **135** allow simultaneous processing of multiple CDMA communications, each processing a communication associated with a different CDMA code. Combining $x$ signals with a known distortion enables the lowering of the transmit power required, increasing the number of subscribers **25** (the number of simultaneous communications) with a given base station.

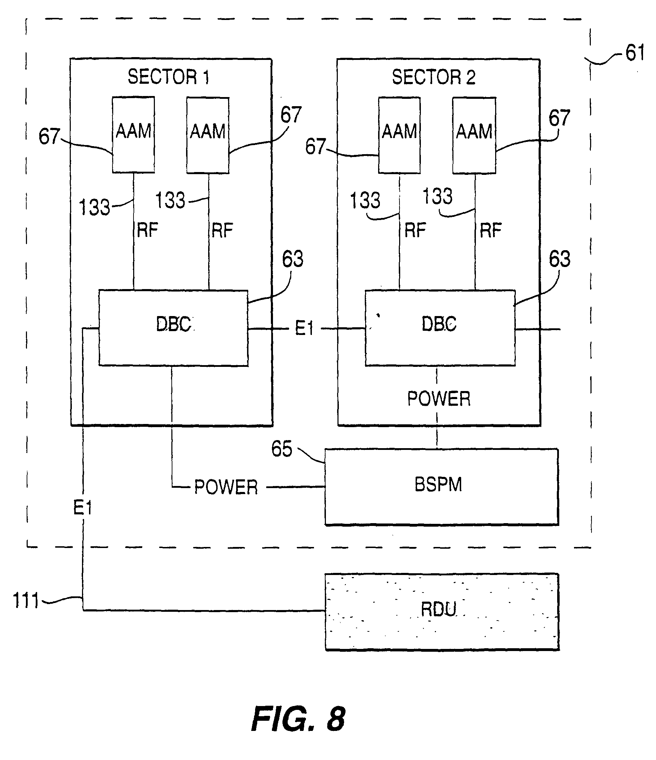

A cellular base station with the maximum number of BSUs in a two trunk configuration is shown in **Figure 8.** A standby relationship is formed between the BSUs **69** in the event of a single failure. From a radio distribution unit (RDU) **153,** a single E1 line **111** carrying up to 68 PCM calls is coupled to the two BSUs **69.** The topology also eliminates single mode failures while increasing signal throughput between modules.

While the present invention has been described in terms of the preferred embodiment, other variations which are within the scope of the invention as outlined in the claims below will be apparent to those skilled in the art.

## Claims

1.  A bidirectional communication system using a CDMA air interface between a plurality of subscriber units communicating with a base station, the system comprising:

    a scalable base station configured from up to a select maximum number n of modular colocated base station units for supporting incremental communication capacity based on the number of modular base station units, each base station unit for communicating with a predefined number of subscriber units;
    each base station unit transmitting a unique CDMA global pilot channel signal at a full power level for a discrete limited time interval which time interval is distinct from the time intervals of all other base station units in the scalable base station configuration; and
    a plurality of subscriber units for CDMA communication with the scalable base station, each subscriber unit having means for selectively receiving global pilot channel signals from up to $n$ modular base station units, such that reception of each global pilot channel signal is in a discrete time interval synchronized with the full power level transmission time interval of the respective global pilot channel signal which time interval is distinct from the reception of all other transmission time intervals of the global pilot channel signals.

2.  The communication system according to claim 1 where n is calculated based upon the maximum desired communication capacity divided by the capacity of a single base station unit.

3.  The communication system according to claim 1 wherein the scalable modular base station is configured from a selected number m of modular base station units where m < n.

4.  The communication system according to claim 1 where n = 6.

5.  The communication system according to claim 1 wherein the time interval is determined by the time of day.

6.  The communication system according to claim 1 wherein the means for selectively receiving global pilot channel signals includes waking up for the discrete time interval.

7.  The communication system according to claim 1 wherein each modular base station unit further transmits a fast broadcast channel and a slow broadcast channel.

8.  The communication system according to claim 1 wherein the means for receiving global pilot channel signals further includes storing the relative global pilot channel signal strength received.

9.  The communication system according to claim 7 wherein the means for receiving global pilot channel signals further includes receiving the slow broadcast channel and the fast broadcast channel and deriving and storing that base station unit's communicating capacity from the slow and fast broadcast channels.

10. The communication system according to claim 9 wherein a subscriber unit initiates communication with one of the modular base station units by choosing from storage the modular base station unit having the strongest global pilot channel signal strength.

11. The communication system according to claim 10 wherein the choosing from storage further includes the communication capacity of that base station unit.

12. A base station for use in a bidirectional communication system using a CDMA air interface between a plurality of subscriber units communicating with the base station, comprising:

a scalable base station configured from up to a select maximum member n of modular colocated base station units for supporting incremental communication capacity based on the number of modular base station units, each base station unit for communicating with a predefined maximum number of subscriber units at any given time; and

each base station unit transmitting a unique CDMA global pilot channel signal at a full power level for a discrete limited time interval which time interval is distinct from the time intervals of all other base station units in the scalable base station configuration.

13. A subscriber unit for use in a bidirectional communication system using a CDMA air interface between the plurality of subscriber units communicating with a base station which transmits multiple global pilot channel signals, comprising:

means for selectively receiving a predetermined number n of global pilot channel signals from the base station such that reception of each global pilot channel signal is in one of n discrete time intervals, each interval for receiving a different global pilot channel signal.

14. A method of providing bidirectional communication using a CDMA air interface between a plurality of subscriber units communicating with a base station, the steps comprising:

configuring from up to a select maximum number n of modular colocated base station units a scalable base station for supporting incremental communication capacity based on the number of modular base station units, each base station unit for communicating with a predefined number of subscriber units;

transmitting a unique CDMA global pilot channel signal from each base station unit at a full power level for a discrete limited time interval which time interval is distinct from the time intervals of all other base station units in the scalable base station configuration; and

selectively receiving global pilot channel signals from up to *n* modular base station units at a plurality of subscriber units for CDMA communication with the scalable base station, such that reception of each global pilot channel signal is in a discrete time interval synchronized with the full power level transmission time interval of the respective global pilot channel signal which time interval is distinct from the reception of all other transmission time intervals of the global pilot channel signals.

**Patentansprüche**

1. Ein bidirektionales Kommunikationssystem mit einer CDMA Luftschnittstelle zwischen einer Mehrzahl von mit einer Basisstation in Verbindung stehenden Teilnehmereinheiten, wobei das System aufweist:

eine skalierbare Basisstation, die konfiguriert aus bis zu einer ausgewählten maximalen Anzahl n modularer miteinander angeordneter Basisstationseinheiten zur Unterstützung einer inkrementellen Datenübertragungskapazität basierend auf der Anzahl modularer Basisstationseinheiten ist, wobei jede Basisstationseinheit zur Kommunikation mit einer vorbestimmten Zahl von Teilnehmereinheiten dient;

jede Basisstationseinheit überträgt ein einzigartiges CDMA Globalpilotkanalsignal auf einem vollem Leistungsniveau in einem diskreten begrenzten Zeitintervall, das sich von den Zeitintervallen aller anderen Basisstationseinheiten in der skalierbaren Basisstationskonfiguration unterscheidet; und

eine Mehrzahl von Teilnehmereinheiten für CDMA Kommunikation mit der skalierbaren Basisstation, wobei jede Teilnehmereinheit Mittel zum selektiven Empfangen von Globalpilotkanalsignalen von bis zu n modularen Basisstationseinheiten aufweist, wobei der Empfang jedes Globalpilotkanalsignals in einem diskreten Zeitintervall stattfindet, das mit dem Zeitintervall der Vollleistungsniveauübertragung des jeweiligen Globalpilotkanalsignals, dessen Zeitintervall sich von dem Empfang aller anderen Übertragungszeitintervalle der Globalpilotkanalsignale unterscheidet, synchronisiert ist.

2. Das Kommunikationssystem nach Anspruch 1, in dem die Anzahl n auf Grundlage der maximal erwünschten Datenübertragungskapazität geteilt durch die Kapazität einer einzelnen Basisstationseinheit berechnet ist.

3. Das Kommunikationssystem nach Anspruch 1, in dem die skalierbare modulare Basisstation aus einer ausgewählten Zahl m modularer Basisstationseinheiten konfiguriert ist, wobei m < n ist.

4. Das Kommunikationssystem nach Anspruch 1, in dem n = 6.

5. Das Kommunikationssystem nach Anspruch 1, in dem das Zeitintervall von der Tageszeit bestimmt ist.

**6.** Das Kommunikationssystem nach Anspruch 1, in dem das Mittel zum selektiven Empfangen von Globalpilotkanalsignalen in diskreten Zeitintervallen ein Aufwachen einschließt.

**7.** Das Kommunikationssystem nach Anspruch 1, in dem jede modulare Basisstationseinheit des weiteren einen schnellen Übertragungskanal und einen langsamen Übertragungskanal überträgt.

**8.** Das Kommunikationssystem nach Anspruch 1, in dem das Mittel zum Empfangen von Globalpilotkanalsignalen des weiteren ein Speichern der relativen Stärke des empfangenen Pilotkanalsignals umfaßt.

**9.** Das Kommunikationssystem nach Anspruch 7, in dem das Mittel zum Empfangen von Globalpilotkanalsignalen des weiteren das Empfangen des langsamen Übertragungskanals und des schnellen Übertragungskanals sowie das Herleiten und das Speichern der Datenübertragungskapazität dieser Basisstationseinheit auf dem langsamen und schnellen Übertragungskanälen umfaßt.

**10.** Das Kommunikationssystem nach Anspruch 9, in dem eine Teilnehmereinheit die Datenübertragung mit einer der modularen Basisstationseinheiten durch ein Auswählen der modularen Basisstationseinheit mit der größten Stärke des Globalpilotkanalsignals einleitet.

**11.** Das Kommunikationssystem nach Anspruch 10, in dem das Auswählen des weiteren die Datenübertragungskapazität dieser Basisstationseinheit einschließt.

**12.** Eine Basisstation zur Verwendung in einem bidirektionalen Datenübertragungssystem mit einer CDMA Luftschnittstelle zwischen einer Mehrzahl von Teilnehmereinheiten, die in Verbindung mit der Basisstation stehen, aufweisend:

eine skalierbare Basisstation konfiguriert aus bis zu einer ausgewählten maximalen Zahl n modularer miteinander angeordneter Basisstationseinheiten zur Unterstützung inkrementeller Datenübertragungskapazität basierend auf der Anzahl modularer Basisstationseinheiten, wobei jede Basisstationseinheit zu jeder bestimmten Zeit mit einer vorbestimmten maximalen Zahl von Teilnehmereinheiten kommunizieren kann; und
wobei jede Basisstationseinheit ein einzigartiges CDMA Globalpilotkanalsignal auf einem vollen Leistungsniveau in einem diskreten begrenzten Zeitintervall überträgt, das sich von den Zeitintervallen aller anderen Basisstationseinheiten in der skalierbaren Basisstationkonfiguration unterscheidet.

**13.** Eine Teilnehmereinheit zur Verwendung in einem bidirektionalen Datenübertragungssystem mit einer CDMA Luftschnittstelle zwischen der Mehrzahl von mit einer Basisstation in Verbindung stehenden Teilnehmereinheiten, wobei die Basisstation mehrfache Globalpilotkanalsignale überträgt, die Teilnehmereinheit aufweist:
Mittel zum selektiven Empfangen einer vorbestimmten Zahl n von Globalpilotkanalsignalen von der Basisstation, so daß das Empfangen jedes Globalpilotkanalsignals in einem von n diskreten Zeitintervallen erfolgt, wobei jedes Intervall zum Empfangen eines anderen Globalpilotkanalsignals bestimmt ist.

**14.** Verfahren zur Bereitstellung einer bidirektionalen Datenübertragung über eine CDMA Luftschnittstelle zwischen einer Mehrzahl von mit einer Basisstation in Verbindung stehenden Teilnehmereinheiten, das Verfahren weist folgende Schritte auf:

das Konfigurieren einer skalierbaren Basisstation aus bis zu einer ausgewählten maximalen Zahl n modularer miteinander angeordneter Basisstationseinheiten zur Unterstützung einer inkrementellen Datenübertragungskapazität basierend auf der Anzahl modularer Basisstationseinheiten, wobei jede Basisstationseinheit zur Kommunikation mit einer vorbestimmten Zahl von Teilnehmereinheiten bestimmt ist;

Übertragen eines einzigartigen CDMA Globalpilotkanalsignals von jeder Basisstationseinheit auf einem vollen Leistungsniveau in einem diskreten begrenzten Zeitintervall, das sich von den Zeitintervallen aller anderen Basisstationseinheiten in der skalierbaren Basisstationkonfiguration unterscheidet; und

selektives Empfangen von Globalpilotkanalsignalen von bis zu n modularen Basisstationseinheiten an einer Mehrzahl von Teilnehmereinheiten für CDMA Kommunikation mit der skalierbaren Basisstation, so daß das Empfangen jedes Globalpilotkanalsignals, in einem diskreten Zeitintervall, mit dem Vollleistungsniveau-Übertragungszeitintervall des jeweiligen Globalpilotkanalsignals synchronisiert ist, dessen Zeitintervall sich von dem Empfangen aller anderen Übertragungszeitintervalle der Globalpilotkanalsignale unterscheidet.

**Revendications**

1. Système de communication bidirectionnel utilisant une interface radio AMRC entre une pluralité d'unités d'abonné communiquant avec une station de base, le système comprenant :

    une station de base évolutive configurée à partir d'un nombre maximum choisi n d'unités de stations de base modulaires situées au même endroit permettant de supporter une capacité de communication incrémentielle en fonction du nombre d'unités de stations de base modulaires, chaque unité de station de base permettant de communiquer avec un nombre prédéfini d'unités d'abonné ;

    chaque unité de station de base transmettant un signal de voie pilote global AMRC unique à pleine puissance dans un intervalle de temps limité discret, ledit intervalle de temps étant distinct des intervalles de temps correspondant à toutes les autres unités de stations de base présentant la configuration de station de base évolutive ; et

    une pluralité d'unités d'abonné permettant d'assurer des communications AMRC avec la station de base évolutive, chaque unité d'abonné présentant des moyens permettant de recevoir de façon sélective des signaux de voies pilotes globaux d'un maximum de n unités de stations de base modulaires, de sorte que la réception de chaque signal de voie pilote global se trouve dans un intervalle de temps discret synchronisé avec l'intervalle de temps de transmission à pleine puissance du signal de voie pilote global respectif, ledit intervalle de temps étant distinct de tous les autres intervalles de temps de transmission des signaux de voies pilotes globaux.

2. Système de communication selon la revendication 1, dans lequel n est calculé en fonction de la capacité de communication maximum souhaitée divisée par la capacité d'une unité de station de base unique.

3. Système de communication selon la revendication 1, dans lequel la station de base modulaire évolutive est configurée à partir d'un nombre choisi m d'unités de stations de base modulaires, avec m<n.

4. Système de communication selon la revendication 1, dans lequel n = 6.

5. Système de communication selon la revendication 1, dans lequel l'intervalle de temps est déterminé par l'heure de la journée.

6. Système de communication selon la revendication 1, dans lequel le moyen permettant de recevoir de façon sélective les signaux de voies pilotes globaux comprend une activation dans l'intervalle de temps discret.

7. Système de communication selon la revendication 1, dans. lequel chaque unité de station de base modulaire transmet en outre une voie de diffusion rapide et une voie de diffusion lente.

8. Système de communication selon la revendication 1, dans lequel le moyen permettant de recevoir les signaux de voies pilotes globaux assure en outre le stockage de l'intensité relative reçue du signal de voie pilote global.

9. Système de communication selon la revendication 7, dans lequel le moyen permettant de recevoir des signaux de voies pilotes globaux assure en outre la réception de la voie de diffusion lente et de la voie de diffusion rapide, la déduction de la capacité de communication de cette unité de station de base d'après les voies de diffusion lente et rapide, ainsi que son stockage.

10. Système de communication selon la revendication 9, dans lequel une unité d'abonné initie une communication avec l'une des unités de stations de base en choisissant, à partir du stockage, parmi les unités de stations de base modulaires, celle qui présente la plus forte intensité de signal de voie pilote global.

11. Système de communication selon la revendication 10, dans lequel le choix à partir du stockage de l'unité de station de base inclut celui de la capacité de communication de cette unité de station de base.

12. Station de base pouvant être utilisée dans un système de communication bidirectionnelle utilisant une interface radio AMRC entre une pluralité d'unités d'abonné communiquant avec la station de base, comprenant :

    une station de base évolutive configurée à partir d'un nombre maximum choisi n d'unités de stations de base modulaires situées au même endroit permettant de supporter une capacité de communication incrémentielle en fonction du nombre d'unités de stations de base modulaires, chaque unité de station de base permettant de communiquer avec un nombre maximum prédéfini d'unités d'abonné à tout instant ; et

chaque unité de station de base transmettant un signal de voie pilote global AMRC unique à pleine puissance dans un intervalle de temps limité discret, ledit intervalle de temps étant distinct des intervalles de temps correspondant à toutes les autres unités de stations de base présentant la configuration de station de base évolutive.

13. Unité d'abonné pouvant être utilisée dans un système de communication bidirectionnelle utilisant une interface radio AMRC entre la pluralité d'unités d'abonné communiquant avec la station de base qui transmet des signaux de voie pilote globaux multiples comprenant :
des moyens permettant de recevoir de façon sélective un nombre prédéterminé n de signaux de voies pilotes globaux de la station de base, de sorte que la réception de chaque signal de voie pilote global se trouve dans l'un des n intervalles de temps discrets, chaque intervalle permettant de recevoir un signal de voie pilote global différent.

14. Procédé permettant d'assurer une communication bidirectionnelle à l'aide d'une interface radio AMRC entre une pluralité d'unités d'abonné communiquant avec une station de base, comprenant les étapes consistant à :

configurer, à partir d'un nombre maximum choisi n d'unités de stations de base modulaires situées au même endroit, une station de base évolutive permettant de supporter une capacité de communication incrémentielle en fonction du nombre d'unités de stations de base modulaires, chaque unité de station de base permettant de communiquer avec un nombre prédéfini d'unités d'abonné ;

transmettre un signal de voie pilote global AMRC unique à partir de chaque unité de station de base à pleine puissance dans un intervalle de temps limité discret, ledit intervalle de temps étant distinct des intervalles de temps correspondant à toutes les autres unités de stations de base présentant la configuration de station de base évolutive ; et

recevoir de façon sélective des signaux de voies pilotes globaux d'un maximum de n unités de stations de base modulaires au niveau d'une pluralité d'unités d'abonné, en vue d'une communication AMRC avec la station de base évolutive, de sorte que la réception de chaque signal de voie pilote global se trouve dans un intervalle de temps discret synchronisé avec l'intervalle de temps de transmission à pleine puissance du signal de voie pilote global respectif, ledit intervalle de temps étant distinct de tous les autres intervalles de temps de transmission des signaux de voies pilotes globaux.

TRANSMITTED SPECTRUM

INFORMATION

INFORMATION

SPREADING
CODE SEQUENCE

DESPREADING
CODE SEQUENCE

PRIOR ART

*FIG. 1*

**FIG. 2**

**FIG. 3**

P/S OUTPUT 81

65

REGULATION — 77

A/C INPUT 79

RECTIFIER INVERTER — 75

BATTERIES 73

## FIG. 4

103

PSM

69

83

85

eg. LTO | eg. LTC | SCM 91 | AIM 1 99 | AIM 2 99 | AIM 3 99 | BTM 93 | AIM 4 99 | AIM 5 99 | AIM 6 99

87

89

109

PIP | PIP

105

SLOT 1 2 3 4 5 6 7 8 9 10

## FIG. 5

| SUB-BASESTATION #2 SEPARATE BACKPLANE | | SUB-BASESTATION #1 SEPARATE BACKPLANE | |
|---|---|---|---|
| PSM | | PSM | |
| eg. LTO | PIP | eg. LTO | PIP |
| eg. LTC | PIP | eg. LTC | PIP |
| SCM | | SCM | |
| AIM 1 | | AIM 1 | |
| AIM 2 | | AIM 2 | |
| AIM 3 | | AIM 3 | |
| BTM | | BTM | |
| AIM 4 | | AIM 4 | |
| AIM 5 | | AIM 5 | |
| AIM 6 | | AIM 6 | |

692

691

SLOT 1 2 3 4 5 6 7 8 9 10 11 12 13 14 15 16 17 18 19 20

DIGITAL BASESTATION UNIT (BSU) #1

DIGITAL BASESTATION UNIT (BSU) #2

*FIG. 6*

**FIG. 7A**

EP 1 062 749 B1

FIG. 7B

EP 1 062 749 B1

FIG. 7C

EP 1 062 749 B1

FIG. 7D

EP 1 062 749 B1

**FIG. 8**